(19) Europäisches Patentamt

European Patent Office

Office européen des brevets

(11) EP 4 530 881 A1

(12) EUROPEAN PATENT APPLICATION

(43) Date of publication:
02.04.2025 Bulletin 2025/14

(21) Application number: 23199849.3

(22) Date of filing: 26.09.2023

(51) International Patent Classification (IPC):
G06F 16/29 (2019.01)       G06F 16/901 (2019.01)
G06F 16/906 (2019.01)      G06N 3/00 (2023.01)

(52) Cooperative Patent Classification (CPC):
G06F 16/29; G06F 16/9024; G06F 16/906;
G06N 3/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Robert Bosch GmbH
70442 Stuttgart (DE)

(72) Inventors:
• Yao, Yu
52134 Herzogenrath (DE)

• Wagner, Joerg
71272 Renningen (DE)
• Guersun, Gonca
70469 Stuttgart (DE)
• Herman, Michael
71065 Sindelfingen (DE)
• Rakitsch, Barbara
70193 Stuttgart (DE)
• Kosman, Eitan
38830 Haifa (IL)

Remarks:
Amended claims in accordance with Rule 137(2)
EPC.

(54) **DEVICE AND METHOD FOR DRIVING ASSISTING OR AUTONOMOUS DRIVING FUNCTIONS**

(57)    A computer-implemented method (20) of predicting dynamics of objects in a surrounding of a vehicle (100). The method starts with a step of receiving (S21) a first data sets characterizing dynamics of the objects respectively. Then, each of the first data sets is propagated (S22) through an encoder (11) outputting a latent representation for each of the first data sets. Then, a graph based on the latent representations is generated (S23). Then, the graph is propagated through a Graph Neural Network (12) outputting an updated graph. Based on the updated graph a decoder (13) outputs a predicted dynamic for selected object for a subsequent time step.

Fig. 1

**Description**

The invention compromises an artificial intelligence-based model architecture for driving assist and autonomous driving functions. The objective is to enable deep learning models in predictive driving tasks for safe and comfortable natural driving.

Prior art

Driving scenes are highly dynamic environments with permanently varying number of traffic participants. Any movement of a participant requires accurately recognizing and predicting the intentions of the other participants around. For instance, if the ego-vehicle recognizes, that the vehicle from the neighboring lane is cutting-in, then the ego-vehicle may decide to brake for safety. In this setup, where predictions at one time step impact the behaviors in the next time steps, the ability to accurately model the interactions of the participants is crucial. Moreover, to be used in the driving assist and autonomous driving system functions, the predictions are required to be made early enough prior to the emergence of the behavior.

A simple generative model of the driving task can be built as a Dynamic Bayesian Network, in particular as a Hidden Markov Model, in which the driving task is modeled as the hidden state that emits the lateral position and velocity at each time step.

The capabilities of such an approach are limited since they do not explicitly model interactions and cannot capture all actual dependencies in complex real driving scenarios. Furthermore, said approach is not able to learn from the signal history but rather act on what is perceived in the current time step.

Advantages of the invention

Essentially, it is proposed to replace Dynamic Bayesian Networks with deep neural network models that can explicitly model the dependencies and interactions between traffic participants.

Deep neural network-based models are capable of learning the complex dependencies in real driving scenarios from the data. Deep neural network models excel in comparison to traditional models, particularly as the complexity of interactions increases. This is due to the deep neural network models' proficiency in learning interactions, which enhances as they are exposed to more real-world driving data during training.

Another advantage by utilizing deep neural networks is a better usage of signals extending longer into the past. Thus, more comprehensive information is available, on the basis of which a more precise prediction can be made.

To sum up, the advantage of the present invention is obtained by a deep learning-based model architecture for behavior prediction in a multi-agent setting via modeling their interactions. Thereby, the past driving data is considered and complex joint behavior over a plurality of traffic participants can be learned.

Furthermore, the proposed invention provides a framework to develop data-efficient and robust AI-based multi-agent prediction models to enable safe and comfortable natural driving.

The proposed architecture can capture the dynamics of driving scenes over a predefined time window. The application can thus be used for L0-L3 driving assist functions and L4-L5 autonomous driving functions.

The modular design of the architecture allows it to be adapted to multiple application scenarios and enables easy identification of the contribution of each component, simplifying architecture optimization.

Disclosure of the invention

In a first aspect, a computer-implemented method of predicting dynamics of objects in a surrounding of a vehicle is proposed. The dynamics of the objects can be behaviors or preferably movements or trajectories of the objects. The objects can be traffic participants like other motorized vehicles (e.g., motorcycles or trucks) or pedestrians or cyclists. Under the surrounding can be understood a vicinity of the vehicle, in particular a vicinity in which objects move and potentially can intersect or get dangerously close to an ego-trajectory of the vehicle.

The method starts with a step of receiving first data sets which characterize dynamics of the objects respectively. The first data sets are time series of features, wherein one of the features of each series characterize current dynamics and the other features of each series characterize previous dynamics of the respective object. A current dynamic is a dynamic of a current point in time and a previous dynamic is a dynamic of previous points in time. It is noteworthy that the number of objects, more precisely the number of first data sets, can change through time as one or more objects can appear or disappear in the surrounding of the vehicle. For example, the number of first data sets can be constant or increase or decrease from one time point to its subsequent time point.

Followed by a step of propagating each of the first data sets through an encoder configured to output a latent representation for each of the first data sets.

Followed by a step of generating a graph based on the latent representations, wherein the nodes are the latent representations, in particular for each and every object, and the nodes are connected in particular with each other by edges. The step of generating the graph can be carried out by defining nodes and connect each and every node with an edge. In other words, the latent representations can be stored in a graph-based data format.

Followed by a step of propagating the graph through a Graph Neural Network outputting an updated graph. The Graph Neural Network has been trained to update the graph.

Followed by a step of propagating a selected node of the updated graph through a decoder configured to output a predicted dynamic for at least the next subsequent time step of the current time step. Preferably, the decoder predicts the dynamics for multiple subsequent time steps. Said method step of propagating can be carried out for a plurality or each of the updated graph nodes to predicts the dynamics of the objects corresponding to said nodes.

The GNN provides the advantage that the number of objects can change over time. Therefore, the method is able to handle time-varying number of different objects.

It is proposed that each feature of the first data set is assigned to a time point of subsequent time points $t$ = 0, 1, 2, ... $k$. $t = k$ can be a current time point for the current dynamics and $t = k + 1$ can be an immediately preceding time point of the current time point for the previous dynamics. The features comprise a velocity and position of the object at the corresponding time point and preferably a category of the object. The features can further comprise environment features characterizing an environment of the corresponding object. The environment feature can be a lane course, traffic signs or the like. It is noted that the number of features can change (e.g. increase or decrease) through time.

Preferably, the encoder and the Graph Neural Network and the decoder have been collectively trained end-to-end. For the end-to-end training, a training data set with a plurality of first data sets and assigned dynamics are provided, wherein parameters of the architecture are learned based on a loss function characterizing a difference between the outputted dynamics and assigned dynamics.

Furthermore, it is proposed that a technical system is controlled depending on the predicted dynamics. The technical system can be a robot or vehicle. The predicted dynamics be used for providing an actuator control signal for controlling an actuator of the technical system. Preferably, the invention of the first aspect is utilized to control a vehicle, in particular utilized for Automated Cruise Control or Automated Lane Changing functions by predicting the driving behavior of the traffic participants around the ego vehicle. In addition, the proposed invention can be used as the prediction components of the fully autonomous driving software architecture stacks.

In a second aspect of the invention, a computer program and machine-readable storage according to the first aspect are proposed.

Embodiments of the invention will be discussed with reference to the following figures in more detail. The figures show:

Figure 1       a schematic architecture;

Figure 2       a flow chart of a method utilizing the architecture; and

Figure 3       a vehicle.

Description of the embodiments

In driving scenes, traffic participants need to understand the intentions of neighboring drivers to predict their future behavior. For instance, predicting the next move of all surrounding traffic participants (overtaking, lane keeping, etc.) enables the driver to make safe decisions about their own moves. The action of one driver at one time step impacts the behavior of a neighboring driver in the next time step. Therefore, the ability to accurately model the interactions of the participants is crucial for automated driving. To that end, the following embodiments propose a data-efficient and robust AI-based multi-agent prediction model to enable safe and comfortable natural driving.

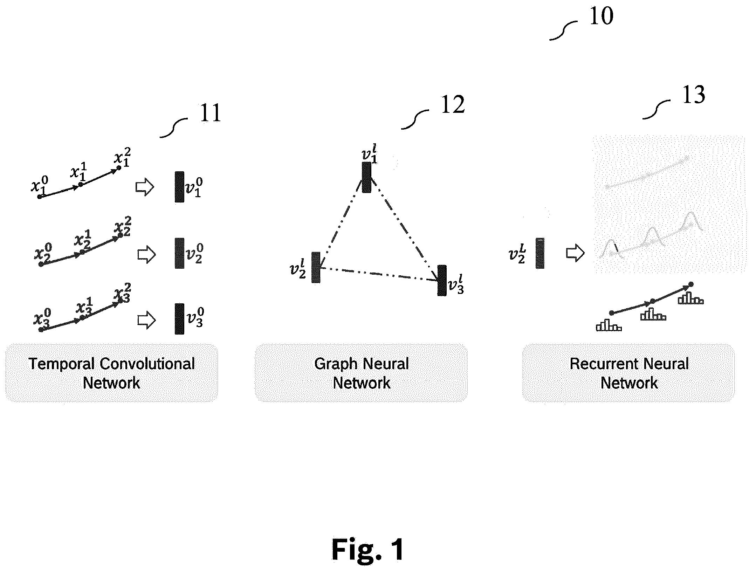

The proposed artificial intelligence-based model architecture 10 according to Figure 1 is a multi-agent deep neural network model that consists of three main modules - an encoder 11, an interaction module 12, and a decoder 13. A model in the proposed architecture can be trained by the real driving data collected with a sensor setting of choice. It is noted that given the provided sensor signals of the sensor setting of choice, a data pre-processing and preferably a post-processing is carried out to obtain required information of objects in the surrounding of the sensor setting.

The data required to train the model can comprise a set of traffic participant features, e.g. their estimated velocity, acceleration, coordinate positions and a set of static environment features, e.g. coordinate position of the lane delimiters, lane existence probabilities, road curviness.

Given the set of available features as input, the proposed architecture 10 encodes the input feature vectors to an efficient latent representation and uses a graph representation of the encoded latent representations as input to a Graph Neural Network to learn the interactions and transforms the learned interactions into a sequence of future predictions using a recurrent neural network-based decoder 13.

In a preferred embodiment of the model architecture 10, it comprises an encoder 11, an interaction module 12, and a decoder 13, wherein the encoder 11 is based on Temporal Convolutional Network (TCN). It can be a generic 1-d convolutional network that modifies the classical 2-d convolutional neural network (CNN) for time series prediction. The encoder 11 maps the input history into a latent space and the mapping is done independently for each agent. Thus, for a given number of agents, the same number of latent representations is obtained. Preferably, each latent representation is assigned to its corresponding agent, e.g. by an index.

The interaction module 12 models interactions between arbitrary number of traffic participants and is preferably a Graph Neural Network (GNN). It is known that the fundamental function of a GNN is to propagate information along a predefined graph to learn meaningful representations. That is, given the encoded input vector for traffic agents, the GNN learns a new embedding for each agent by treating each agent as a node in the graph and information exchange between the agents takes place by sending messages along edges of a predefined graph.

As GNN architecture, a Graph Attention Network is a preferred choice as it is capable of automatically learning which neighboring agents to pay attention to.

The decoder module 13 can consist of a feed forward network, preferably a recurrent neural network (RNN), which transforms the output of the interaction module into a sequence of future predictions. The decoder maps the latent state to a sequence of target predictions. RNNs are one class of feed forward neural networks that can model such sequence data. The premise of RNNs is that they can learn the actual dependencies between past time steps to predict the future.

The proposed three-component model architecture 10 is trainable with driving data collected with various sensor settings in an end-to-end fashion. More precisely, one or a plurality of driving scenarios with a plurality of objects/agents are recorded over a given time span. For predefined time points in said time span, features x for each agent/object are determined. These features are used as training data. A short sequence of subsequent features (e.g. up to 5 seconds of temporally subsequent time points of each object) are used as training input for the architecture 10 and the selected features immediately following the training input features characterizing the behavior (e.g. direction, velocity) are used as label for the output of the decoder 13. The content of the future predictions of the decoder module 13 can characterize the same content as of the inputs or can characterize different content. For example, the predictions can either be a category (e.g. the vehicles around are keeping their current lane or changing lane) or the predictions can be the estimated coordinate of the vehicles around. Preferably, the predictions for each of the objects are the categories of 'Lane Keeping' or 'Lane Changing' of the respective object. Via supervised machine learning, parameters of the three modules 11,12,13 of the architecture 10 are optimized to imitate the labels for the corresponding training input ground truth data.

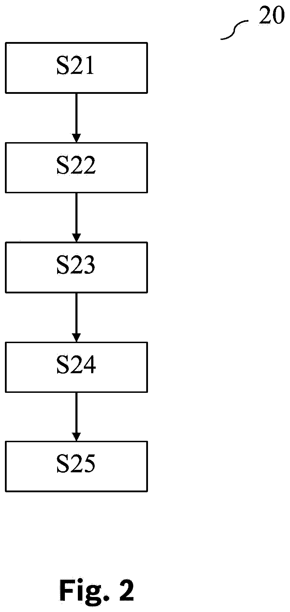

Figure 2 shows a flow chart 20 of a method for predicting dynamics of objects in a surrounding of a vehicle 100 using the trained architecture 10.

The method begins with a step of receiving S21 first data sets characterizing dynamics of the objects respectively, wherein the first data sets are time series of features ( $x_1^{0:k}, x_2^{0:k}, x_3^{0:k}$ ), wherein the subscripts of the features x represent the corresponding object (e.g. vehicle) in the scene. Since the notation $x_i^{0:k}$ represent time series, the features of $x_i^{0:k}$ of the i-th object itself comprise several time series data points (e.g. $t = 0 \dots k$). The time series data points can be defined by a superscript that represents a point in time $t$, wherein the time can start with $t = 0$ to a current time $t = k$. For example, the features $x_i^{0:k}$ of the i-th object comprise a current feature ($x_i^k$) and previous features ($x_i^{k-1}, \dots, x_i^0$) of the i th - object: $\overline{x}_i = x_i^0, \dots x_i^k$. In other words, the inputs of the encoder 11 are, for each object i in the scene, a series of features $\overline{x}_i$.

Then, a step of propagating S22 is carried out. In this step, each of the first data sets is propagated through an encoder 11 outputting a latent representation ($v_1, v_2, v_3$) for each of the first data sets. In other words, the vectors $v$ are generated at time step $k$, using a predefined number of features from the history.

Then, a step of generating S23 is carried out. In this step, a graph is generated based on the latent representations ($v_1, v_2, v_3$), wherein the nodes are the latent representations, and the nodes are connected by edges.

Then, a step of propagating S24 is carried out. In this step, the graph is propagated through a Graph Neural Network 12 outputting an updated graph. Preferably, step S24 is carried out for L iterations until convergence.

Then, a step of propagating (S25) is carried out. In this step, a selected node of the updated graph is propagated through a decoder 13 configured to output a predicted dynamic for a subsequent time step for the object assigned to the selected node.

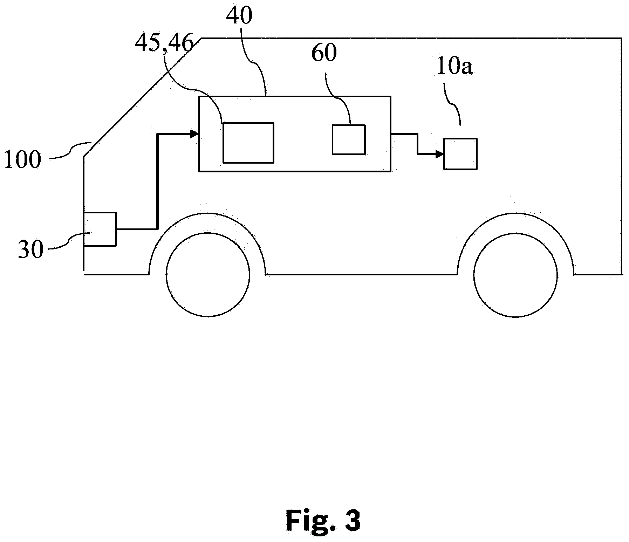

Shown in figure 3 is one embodiment of an actuator with a control system 40. Actuator and its environment will be jointly called actuator system. At preferably evenly spaced distances, a sensor 30 senses a condition of the actuator system. The sensor 30 may comprise several sensors. Preferably, sensor 30 is an optical sensor that takes images of the environment. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator unit that converts the control commands *A* into mechanical movements or changes in physical quantities. For example, the actuator unit may convert the control command *A* into an electric, hydraulic, pneumatic, thermal, magnetic and/or mechanical movement or change. Specific yet non-limiting examples include electrical motors, electroactive polymers, hydraulic cylinders, piezoelectric actuators, pneumatic actuators, servomechanisms, solenoids, stepper motors, etc.

Control system 40 receives the stream of sensor signals S of sensor 30 in an optional receiving unit 50. Receiving unit 50 transforms the sensor signals S into input features $x$. Input features $x$ are then passed on to the module 60, which contains the trained architecture 10 of Fig. 1.

The module 60 determines the predictions outputted by the trained architecture 10 and determined depending on the predictions an output signal y. The output signal y can be a control signal for controlling the actuator. Alternatively, the output signal y is transmitted to a conversion unit 80, which converts the output signals y into the control commands $A$. Actuator control commands A are then transmitted to actuator unit for controlling actuator unit accordingly. Alternatively, output signals y may directly be taken as control commands A.

Actuator unit receives actuator control commands A, is controlled accordingly and carries out an action corresponding to actuator control commands A. Actuator unit may comprise a control logic which transforms actuator control command A into a further control command, which is then used to control actuator.

In further embodiments, control system 40 may comprise sensor 30. In even further embodiments, control system 40 alternatively or additionally may comprise actuator.

In one embodiment module 60 may be designed to identify lane changes of traffic participants. Likewise, upon identifying movements of pedestrians and/or vehicles, a predicted future behavior of said pedestrians and/or vehicles is estimated, and based on said estimated future behavior, a trajectory may then be selected such as to avoid collision with said pedestrian and/or said vehicle, and said actuator control command A may be computed to steer the vehicle such as to execute said trajectory.

In still further embodiments, it may be envisioned that control system 40 controls a display 10a instead of an actuator, wherein the display 10a can display the control command or the like. In other embodiments, the display 10a can be an output interface to a rendering device, such as a display, a light source, a loudspeaker, a vibration motor, etc., which may be used to generate a sensory perceptible output signal which may be generated based on the output of module 60.

Furthermore, control system 40 may comprise a processor 45 (or a plurality of processors) and at least one machine-readable storage medium 46 on which instructions are stored which, if carried out, cause control system 40 to carry out a method according to one aspect of the invention.

In a preferred embodiment of Figure 3, the control system 40 is used to control the actuator, which is an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment.

Actuator unit, which is preferably integrated in vehicle 100, may be given by a brake, a propulsion system, an engine, a drivetrain, or a steering of vehicle 100. Actuator control commands A may be determined such that actuator (or actuators) unit is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

## Claims

1. A computer-implemented method (20) of predicting dynamics of objects in a surrounding of a vehicle (100), comprising the steps of:

   Receiving (S21) first data sets characterizing dynamics of the objects ($i$) respectively, wherein the first data sets are time series of features ($x_1^{0:k}, x_2^{0:k}, x_3^{0:k}$), wherein one of the features of each time series of features characterize current dynamics ($x_i^k$) and the other features characterize previous dynamics ($x_i^{k-1}, x_i^{k-2}$);
   Propagating (S22) each of the first data sets through an encoder (11) configured to output a latent representation ($v_1, v_2, v_3$) for each of the first data sets;
   Generating (S23) a graph based on the latent representations ($v_1, v_2, v_3$), wherein the nodes are the latent representations and the nodes are connected by edges;
   Propagating (S24) the graph through a Graph Neural Network (12) outputting an updated graph;
   Propagating (S25) at least a selected node of the updated graph through a decoder (13) configured to output a predicted dynamic.

2.  The method according to claim 1, wherein the encoder (11) is a neural network, in particular a Temporal Convolutional Network or Transformer, wherein the Graph Neural Network is a Graph Attention Network, wherein the decoder (13) is a neural network, in particular a Recurrent Neural Network or LSTM or Transformer.

3.  The method according to claim 1 or 2, wherein each feature of the first data set is assigned to a time point of subsequent time points ($t = 0,1,2,.. k$), wherein the features of the first data sets characterize at least a velocity and position of the object at the corresponding time point, in particular a category of the object.

4.  The method according to claim 3, wherein the features further comprise environment features characterizing an environment of the object.

5.  The method according to any one of claims 1 to 4, wherein the encoder (11) and the Graph Neural Network (12) and the decoder (13) have been collectively trained end-to-end.

6.  The method according to any one of the preceding claims, wherein the predicted dynamics are lane changes of other traffic participants.

7.  The method according to any one of the preceding claims, wherein a technical system (100) is controlled depending on the predicted dynamics.

8.  Computer program that is configured to cause a computer to carry out the method according to any one of claims 1 to 7 with all of its steps if the computer program is carried out by the computer.

9.  Machine-readable storage medium on which the computer program according to claim 8 is stored.

10. System that is configured to carry out the method according to any one of claims 1 to 7.

**Amended claims in accordance with Rule 137(2) EPC.**

1.  A computer-implemented method (20) of predicting dynamics of objects in a surrounding of a vehicle (100), comprising the steps of:

Receiving (S21) first data sets characterizing dynamics of the objects (i) respectively, wherein the first data sets are time series of features ($x_1^{0:k}, x_2^{0:k}, x_3^{0:k}$), wherein one of the features of each time series of features characterize

current dynamics ($x_i^k$) and the other features characterize previous dynamics ($x_i^{k-1}, x_i^{k-2}$);
Propagating (S22) each of the first data sets through an encoder (11) configured to output a latent representation ($v_1, v_2, v_3$) for each of the first data sets, wherein the encoder (11) is a Temporal Convolutional Network;
Generating (S23) a graph based on the latent representations ($v_1, v_2, v_3$), wherein the nodes are the latent representations, and the nodes are connected by edges;
Propagating (S24) the graph through a Graph Neural Network (12) outputting an updated graph, wherein the Graph Neural Network (12) is a Graph Attention Network;
Propagating (S25) at least a selected node of the updated graph through a decoder (13) configured to output a predicted dynamic.

2.  The method according to claim 1, wherein each feature of the first data set is assigned to a time point of subsequent time points ($t = 0,1,2,.. k$), wherein the features of the first data sets characterize at least a velocity and position of the object at the corresponding time point, in particular a category of the object.

3.  The method according to claim 2, wherein the features further comprise environment features characterizing an environment of the object.

4.  The method according to any one of claims 1 to 3, wherein the encoder (11) and the Graph Neural Network (12) and the decoder (13) have been collectively trained end-to-end.

5.  The method according to any one of the preceding claims, wherein the predicted dynamics are lane changes of other traffic participants.

6.  The method according to any one of the preceding claims, wherein a technical system (100) is controlled depending on the predicted dynamics.

7.  Computer program that is configured to cause a computer to carry out the method according to any one of claims 1 to 6 with all of its steps if the computer program is carried out by the computer.

8.  Machine-readable storage medium on which the computer program according to claim 7 is stored.

9.  System that is configured to carry out the method according to any one of claims 1 to 6.

1.  A computer-implemented method (20) of predicting dynamics of objects in a surrounding of a vehicle (100), wherein the predicted dynamics are lane changes or overtaking or lane keeping of other traffic participants, comprising the steps of:

Receiving (S21) first data sets characterizing dynamics of the objects (i) respectively, wherein the first data sets are time series of features ( $x_1^{0:k}, x_2^{0:k}, x_3^{0:k}$ ), wherein one of the features of each time series of features characterize current dynamics ($x_i^k$) and the other features characterize previous dynamics ($x_i^{k-1}$, $x_i^{k-2}$);

Propagating (S22) each of the first data sets through an encoder (11) configured to output a latent representation ($v_1$, $v_2$, $v_3$) for each of the first data sets, wherein the encoder (11) is a Temporal Convolutional Network;

Generating (S23) a graph based on the latent representations ($v_1$, $v_2$, $v_3$), wherein the nodes are the latent representations, and the nodes are connected by edges;

Propagating (S24) the graph through a Graph Neural Network (12) outputting an updated graph, wherein the Graph Neural Network (12) is a Graph Attention Network;

Propagating (S25) at least a selected node of the updated graph through a decoder (13) configured to output a predicted dynamic.

**2.** The method according to claim 1, wherein each feature of the first data set is assigned to a time point of subsequent time points ($t = 0,1,2,..k$), wherein the features of the first data sets characterize at least a velocity and position of the object at the corresponding time point, in particular a category of the object.

**3.** The method according to claim 2, wherein the features further comprise environment features characterizing an environment of the object.

**4.** The method according to any one of claims 1 to 3, wherein the encoder (11) and the Graph Neural Network (12) and the decoder (13) have been collectively trained end-to-end.

**5.** The method according to any one of the preceding claims, wherein a technical system (100) is controlled depending on the predicted dynamics.

**6.** Computer program that is configured to cause a computer to carry out the method according to any one of claims 1 to 5 with all of its steps if the computer program is carried out by the computer.

**7.** Machine-readable storage medium on which the computer program according to claim 6 is stored.

**8.** System that is configured to carry out the method according to any one of claims 1 to 5.

**Fig. 1**

EP 4 530 881 A1

```
┌─────────┐
│   S21   │
└─────────┘
     │
     ▼
┌─────────┐
│   S22   │
└─────────┘
     │
     ▼
┌─────────┐
│   S23   │
└─────────┘
     │
     ▼
┌─────────┐
│   S24   │
└─────────┘
     │
     ▼
┌─────────┐
│   S25   │
└─────────┘
```

**Fig. 2**

**Fig. 3**

Europäisches
Patentamt

European
Patent Office

Office européen
des brevets

# EUROPEAN SEARCH REPORT

Application Number

EP 23 19 9849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mo Xiaoyu ET AL: "ReCoG: A Deep Learning Framework with Heterogeneous Graph for Interaction-Aware Trajectory Prediction", arXiv.org, 9 December 2020 (2020-12-09), pages 1-10, XP093140372, Ithaca DOI: 10.48550/arxiv.2012.05032 Retrieved from the Internet: URL:https://arxiv.org/pdf/2012.05032.pdf [retrieved on 2024-03-12] * abstract * * Section III.A * * Section III.C.1 * * Section III.C.3 * * Section III.C.4 * * figure 1 * | 1-10 | INV. G06F16/29 G06F16/901 G06F16/906 G06N3/00 |
| X | Li Jiachen ET AL: "Spatio-Temporal Graph Dual-Attention Network for Multi-Agent Prediction and Tracking", arxiv.org, 18 February 2021 (2021-02-18), pages 1-14, XP093140523, DOI: 10.1109/TITS.2021.3094821 Retrieved from the Internet: URL:https://arxiv.org/pdf/2102.09117.pdf [retrieved on 2024-03-12] * abstract * * Section V.A * * Section V.B * * Section V.C * * Section V.D * * figure 2 * | 1-10 | |
| | | | TECHNICAL FIELDS SEARCHED (IPC) |
| | | | G06F G06N |

-/--

The present search report has been drawn up for all claims

| Place of search | Date of completion of the search | Examiner |
|---|---|---|
| Berlin | 12 March 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ...........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 9849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mo Xiaoyu ET AL: "Graph and Recurrent Neural Network-based Vehicle Trajectory Prediction For Highway Driving", arxiv.org, 8 July 2021 (2021-07-08), pages 1-6, XP093140355, Retrieved from the Internet: URL:https://arxiv.org/pdf/2107.03663.pdf [retrieved on 2024-03-12] * abstract * * Section II.A * * Section II.B * * Section III.B * * figure 1 * | 1-10 | |
| X | ZHANG LU ET AL: "Trajectory Prediction with Graph-based Dual-scale Context Fusion", 2022 IEEE/RSJ INTERNATIONAL CONFERENCE ON INTELLIGENT ROBOTS AND SYSTEMS (IROS), IEEE, 23 October 2022 (2022-10-23), pages 11374-11381, XP034257682, DOI: 10.1109/IROS47612.2022.9981923 [retrieved on 2022-12-26] * abstract * * Section III.C * * Section III.E * * Section III.G * * figure 2 * | 1-10 | TECHNICAL FIELDS SEARCHED (IPC) |

-/--

The present search report has been drawn up for all claims

| Place of search | Date of completion of the search | Examiner |
|---|---|---|
| Berlin | 12 March 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 19 9849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG YANJUN ET AL: "A Survey on Trajectory-Prediction Methods for Autonomous Driving", IEEE TRANSACTIONS ON INTELLIGENT VEHICLES, IEEE, vol. 7, no. 3, 12 April 2022 (2022-04-12), pages 652-674, XP011925138, ISSN: 2379-8858, DOI: 10.1109/TIV.2022.3167103 [retrieved on 2022-04-13] * the whole document * | 1-10 | |

**TECHNICAL FIELDS SEARCHED (IPC)**

The present search report has been drawn up for all claims

| Place of search | Date of completion of the search | Examiner |
|---|---|---|
| Berlin | 12 March 2024 | Pose Rodríguez, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)